# FASCICULE DE BREVET EUROPEEN

(11) **EP 3 479 644 B1**
(45) Date de publication et mention de la délivrance du brevet: **13.11.2024**
(21) Numéro de dépôt: 17742792.9
(22) Date de dépôt: 06.06.2017
(51) Int. Cl.: H04W 48/18

(54) **PROCÉDÉ DE CONNEXION D'UN TERMINAL UTILISATEUR À UNE TRANCHE DE RÉSEAU**
VERFAHREN ZUR VERBINDUNG EINES BENUTZERENDGERÄTS MIT EINEM NETZWERK-SLICE
METHOD FOR CONNECTING A USER TERMINAL TO A NETWORK SLICE

(30) Priorité: 07.06.2016 FR 1655213
(43) Date de publication de la demande: 08.05.2019
(73) Titulaire: Orange, 92130 Issy-les-Moulineaux (FR)
(72) Inventeur: KIESSLING, Lars, 92320 Châtillon (FR); MASSICOT, Bernard, 92320 Issy Les Moulineaux (FR); DAOUD TRIKI, Khadija, 92190 Meudon (FR)
(86) Numéro de dépôt international: PCT/FR2017/051420
(87) Numéro de publication internationale: WO 2017/212162

(56) Documents cités:
- EP-A1- 3 417 648
- EP-A1- 3 664 492
- HUAWEI ET AL: "UE Slice Association/Overload control Procedure", vol. SA WG2, no. Nanjing, China; 20160523 - 20160527, 27 May 2016 (2016-05-27), XP051116618, Retrieved from the Internet <URL:http://www.3gpp.org/ftp/tsg_sa/WG2_Arch/TSGS2_115_Nanjing_China/Docs/> [retrieved on 20160527]
- NOKIA ET AL: "Solutions for for Network Slice Selection", vol. RAN WG3, no. Nanjing, China; 20160523 - 20160527, 22 May 2016 (2016-05-22), XP051106154, Retrieved from the Internet <URL:http://www.3gpp.org/ftp/Meetings_3GPP_SYNC/RAN3/Docs/> [retrieved on 20160522]
- ZTE: "Network Slice Selection Procedure", vol. RAN WG3, no. Nanjing, China; 20160523 - 20160527, 22 May 2016 (2016-05-22), XP051105915, Retrieved from the Internet <URL:http://www.3gpp.org/ftp/Meetings_3GPP_SYNC/RAN3/Docs/> [retrieved on 20160522]
- ZTE: "Clarification on Network Slicing in RAN", vol. RAN WG3, no. Nanjing, China; 20160523 - 20160527, 22 May 2016 (2016-05-22), XP051105914, Retrieved from the Internet <URL:http://www.3gpp.org/ftp/Meetings_3GPP_SYNC/RAN3/Docs/> [retrieved on 20160522]

## Description

### 1. Domaine de l'invention

L'invention se situe dans le domaine des réseaux de télécommunications.

### 2. Etat de la technique antérieure

L'architecture des réseaux de télécommunications mobiles a jusqu'ici été standardisée via un groupe de standardisation connu sous le nom de 3GPP. C'est en particulier le cas des réseaux mobiles dits « 2G », « 3G » et « 4G », dont les différentes architectures sont définies dans des spécifications techniques établies par un tel organisme.

Jusqu'à la génération « 4G » de réseau mobile actuellement en cours de déploiement, les différentes architectures de réseau reposent sur des équipements bien spécifiques et dédiés à certaines fonctionnalités précises, que ce soit au niveau du réseau d'accès ou du coeur de réseau, notamment en ce qui concerne la transmission de paquets depuis ou à destination d'un terminal mobile.

Le manque de flexibilité et d'évolutivité inhérent à ce type d'architecture conventionnelle a amené à envisager l'adoption d'architectures plus flexibles pour la prochaine génération de réseaux mobile, dite « 5G », afin de pouvoir répondre rapidement à des demandes extrêmement diverses en termes de trafic ou de qualité de service. Il est à noter que les réseaux 5G ont vocation à concerner aussi bien les réseaux mobiles que les réseaux fixes. Par conséquent, les techniques inhérentes au développement des réseaux 5G concernent aussi bien les infrastructures fixes que mobiles.

Parmi les solutions envisagées, une des solutions les plus prometteuses repose sur une technique de découpage par tranches du réseau (« network slicing » en anglais), évoquée notamment dans le rapport technique 3GPP TR 23.799 v0.2.0 de février 2016.

Le concept de tranche de réseau est destiné à supporter des services de communications pour des services spécifiques, des clients spécifiques ou des terminaux spécifiques en appliquant des moyens adaptés de gestion de trafic pour ces besoins spécifiques. Une tranche de réseau est composée de fonctions réseaux et de configurations permettant de satisfaire les exigences liées aux services à satisfaire par l'intermédiaire de cette tranche de réseau. Les tranches de réseau déployées par un opérateur ne sont pas toutes composées des mêmes fonctions réseaux sachant que l'idée est d'adapter l'architecture et les tranches de réseau aux besoins du cas d'usage lié à cette tranche de réseau. A titre d'exemple, une tranche de réseau mise en oeuvre pour les services liés aux services loT (en anglais Internet of Things) pourra nécessiter de gérer un grand nombre de terminaux mais un débit associé à chaque terminal plutôt faible s'il s'agit par exemple de relevés de compteurs. Un service proposé à une clientèle professionnelle nécessitera des fonctions avancées de sécurité et de disponibilité. L'objectif est d'activer pour une tranche de réseau donnée les seules fonctions indispensables pour le cas d'usage correspondant à la tranche de réseau et de ne pas mettre en oeuvre de fonctions superflues. Cette architecture en tranches de réseau a pour objectif de fournir plus de flexibilité à l'opérateur et de proposer aux clients des services correspondant à leurs besoins en activant les seules fonctions nécessaires.

La notion de tranche de réseau est très souvent associée aux techniques de virtualisation. Afin d'éviter de déployer des équipements physiques pour chaque tranche de réseau, l'opérateur peut avantageusement utiliser des fonctions virtualisées pour mettre en oeuvre une tranche de réseau, permettant ainsi de déployer une seule infrastructure physique et d'activer sur cette infrastructure physique plusieurs tranches de réseau. L'opérateur pourra également déployer des équipements physiques pour certaines fonctions et une architecture virtualisée pour d'autres fonctions. Certaines fonctions, par exemple d'ordonnancement dans les réseaux d'accès, pourront être mutualisées entre les différentes tranches de réseau tandis que certaines, par exemple de DPI (en anglais Deep Packet Inspection) seront utilisées pour un nombre limité de tranches de réseau.

Une telle technique de découpage par tranches du réseau permet ainsi à l'opérateur d'un réseau de télécommunications de créer des réseaux « sur mesure », capables de fournir des solutions optimisées pour des scénarios très variés avec des contraintes très diverses en termes de fonctionnalité et de performance.

Il est prévu qu'une multitude de tranches de réseau puissent simultanément être exécutées au sein d'un même réseau de télécommunications, afin d'offrir différents services au travers de ce réseau.

Les tranches de réseau concernent principalement dans les techniques actuelles les coeurs de réseau, comprenant notamment le MME (en anglais Mobility Management Entity), la SGW (en anglais Serving Gateway) et la PGW (en anglais PDN Gateway)). Ainsi, un opérateur a la possibilité de dédier des coeurs de réseau, par exemple pour un opérateur virtuel, pour une catégorie spécifique de clients ou pour un service spécifique. La séparation des ressources n'est cependant pas uniquement valide pour les coeurs de réseau et il est peut être envisagé de dédier également les ressources d'accès, par exemple les eNodeB, les NodeB, les RNC (en anglais les Radio Network Controller) ainsi que les futurs noeuds d'accès des réseaux de future génération (5G). Les fréquences des réseaux d'accès radio peuvent elles-mêmes être dédiées. Ainsi, il est possible de dédier complètement une architecture de réseau mobile incluant accès et coeur de réseau et de déployer une tranche de réseau comprenant des ressources d'accès et de coeur de réseau, par exemple pour s'assurer que le traitement des flux associés au cas d'usage supporté par la tranche de réseau permet de satisfaire les exigences du cas d'usage en question.

La sélection d'une tranche de réseau par le terminal est réalisée par un équipement du coeur de réseau ou bien par un équipement du réseau d'accès en coopération avec un équipement du coeur de réseau. Quelle que soit la technique utilisée, cette sélection nécessite que le terminal se connecte au préalable au réseau d'accès voire au coeur de réseau pour se voir attribuer une tranche de réseau, y compris si aucune tranche de réseau ne lui est attribuée, utilisant donc des ressources du réseau d'accès et de coeur de réseau de façon inappropriée.

La présente invention a pour objet de remédier à ces inconvénients.

### 3. Exposé de l'invention

L'invention vient améliorer la situation avec un procédé de connexion d'un terminal utilisateur à un sous ensemble d'un réseau dédié à un service, dit tranche de réseau, mis en oeuvre par le terminal et comprenant :
- au moins une étape de réception d'un message comprenant au moins un identifiant de tranche de réseau ou de service, en provenance d'un équipement d'accès associé à l'au moins une tranche identifiée ;
- une étape de sélection d'une tranche de réseau en fonction de paramètres compris dans le terminal, et de l'au moins un identifiant de tranche reçu ;
- une étape d'attachement à l'équipement d'accès associé à la tranche ou de service de réseau sélectionnée, des informations comprenant une adresse IP ou un nom FQDN dudit équipement d'accès, permettant au terminal de s'attacher audit équipement d'accès et étant reçues dans le message comprenant l'au moins un identifiant de tranche de réseau ou de service.

Le développement d'architectures basées sur des tranches de réseau, ces tranches pouvant être propres au coeur de réseau et/ou au réseau d'accès, nécessitent pour le terminal de sélectionner une tranche de réseau parmi les tranches de réseau disponibles. Les tranches de réseau correspondent à des services au sens large. En effet, la tranche de réseau peut offrir un service de type M2M (en anglais Machine to Machine), un service d'accès aux données haut débit ou bien être une infrastructure dédiée au trafic d'une clientèle professionnelle, voire au trafic d'un opérateur mobile virtuel par exemple. L'opérateur déployant une architecture structurée en tranches de réseau peut proposer ses services en associant un trafic donné à une tranche de réseau. Le procédé selon l'invention permet avantageusement d'informer le terminal utilisateur des différentes tranches accessibles et de sélectionner la tranche de réseau préalablement à son attachement effectif à un équipement d'accès, permettant ainsi de ne pas utiliser de ressources du réseau d'accès qui se révèleraient par la suite non optimales. Selon les techniques aujourd'hui disponibles, le terminal doit se connecter au réseau avant d'être informé des tranches de réseau disponibles et ensuite d'en sélectionner une. Selon ces techniques antérieures, le terminal doit donc s'attacher à un équipement d'accès voire également à un équipement de coeur de réseau qui n'est pas forcément celui qui lui permettra de se connecter à la tranche de réseau la plus adaptée. Ces techniques sont peu adaptées à un contexte où les opérateurs cherchent à économiser au maximum les ressources des réseaux.

Selon l'invention, le terminal se voit informé des tranches de réseau par exemple par des messages diffusés au niveau radio s'il s'agit d'un réseau d'attachement mobile ou sur le lien filaire (optique, cuivre..) si le terminal est raccordé à un réseau filaire. Une fois les identifiants de tranches de réseau reçus, le terminal utilisateur sélectionne la tranche de réseau suivant un algorithme qui lui est propre, sur la base des informations et d'autres paramètres déterminés, tels que par exemple des identifiants de tranche qui pourront être classés par ordre de priorité. Un terminal peut par exemple recevoir plusieurs identifiants de tranches de réseau, et doit donc en sélectionner une avant de s'attacher à un équipement d'accès de cette tranche. S'il s'agit d'un terminal destiné à utiliser des services M2M d'un opérateur « lambda », il peut sélectionner la tranche de réseau dont l'identifiant correspond aux services M2M d'un réseau d'attachement de l'opérateur « lambda » sur lequel les flux des sessions M2M peuvent être véhiculés. S'il s'agit d'un smartphone ayant souscrit un abonnement à des services professionnels par exemple dans le cas où le terminal fait partie d'une flotte de terminaux d'une entreprise, il sélectionne la tranche de réseau dédiée aux services professionnels. S'il s'agit d'un téléphone personnel, il sélectionne la tranche de réseau grand public. Un ordre de priorité de connexion aux tranches de réseau peut être défini dans l'algorithme de sélection pour que le terminal sélectionne en priorité la tranche de réseau « professionnel » s'il reçoit par exemple des identifiants relatifs à des tranches de réseau grand public et professionnel. Une fois la tranche de réseau sélectionnée, le terminal est en mesure de s'attacher à un équipement d'accès de cette tranche.

Selon une caractéristique particulière, le procédé de connexion comprend en outre une étape de réception par le terminal utilisateur d'au moins un identifiant de réseau d'opérateur.

En plus d'identifiants de tranches de réseau auxquelles il est susceptible de s'attacher, le terminal peut recevoir des identifiants de réseaux d'opérateurs qui pourront être utilisés par le terminal pour sélectionner un réseau d'opérateur en plus de la tranche de réseau dédiée à un service. La réception d'un identifiant d'opérateur en plus d'un identifiant de tranche permet de mettre en oeuvre un procédé de connexion enrichi s'appuyant sur l'identifiant d'opérateur et l'identifiant de tranche. L'algorithme de sélection pourra sélectionner d'abord l'opérateur puis la tranche de réseau ou bien l'identifiant de tranche puis l'opérateur dans le cas où le service lié à la tranche de réseau est proposé par divers opérateurs. Cette seconde option nécessite que l'identifiant de tranche soit identifié et reconnu par les différents opérateurs mettant en oeuvre une tranche de réseau correspondant à cet identifiant. Il pourra être opportun que l'identifiant de tranche, notamment dans ce cas, soit un identifiant normalisé.

Un terminal mobile est informé des réseaux d'attachement auxquels il peut se connecter par des identifiants de type PLMN-id (en anglais Public Land Mobile Network Identifier) diffusés par les réseaux d'accès mobiles. Cet identifiant qui permet à un terminal mobile de connaître les réseaux mobiles d'opérateur accessibles depuis l'endroit où il se situe, peut être avantageusement utilisée dans cette invention comme un paramètre de sélection du réseau d'opérateur mobile complétant le procédé de sélection de tranche de réseau. Dans le cas où l'identifiant de tranche de réseau n'est pas spécifique à un opérateur, il pourra être normalisé, conformément à ce qui est défini pour le PLMN-ld, de façon à faciliter le processus de sélection et de détermination au niveau du terminal notamment.

Selon une autre caractéristique particulière, dans le procédé de connexion, l'au moins un identifiant de tranche est associé à l'identifiant de réseau d'opérateur.

L'identifiant de tranche peut avantageusement être associé à l'identifiant sur le réseau d'opérateur sur lequel la tranche de réseau est mise en oeuvre. Notamment, dans le processus de sélection de la tranche de réseau, l'information sur le réseau d'opérateur pourra par exemple être comprise dans l'identifiant de tranche, ce qui représente un exemple d'association entre les identifiants, et pourra avantageusement être mise à profit pour sélectionner la tranche de réseau. Il pourrait ainsi être envisagé que seule l'information de tranche soit diffusée aux terminaux, et non plus le PLMN-ld, et que la syntaxe de l'identifiant de tranche suffise à sélectionner le réseau d'opérateur ainsi que la tranche de réseau. L'information sur le réseau d'opérateur peut également être mise à profit si l'identifiant sur le réseau d'opérateur, tel que le PLMN-ld, est également reçu par le terminal. En effet, l'information sur le réseau d'opérateur associée à l'identifiant de tranche permet de corréler l'information sur la tranche de réseau et l'information sur le réseau d'opérateur. Le terminal peut donc sélectionner une tranche de réseau mise en oeuvre sur un réseau d'opérateur identifié par l'information sur le réseau d'opérateur associée à l'identifiant de tranche reçu. Par exemple, l'identifiant de tranche peut être structuré par exemple selon les méthodes suivantes :
Méthode 1 :
   Des informations reçues structurées de la façon suivante IdS1 : PLMN1, IdS2 : PLMN2 signifient que la tranche de service dont l'identifiant est IdS1 est mise en oeuvre sur le réseau d'opérateur 1 et que la tranche de réseau dont l'identifiant est IdS2 est mise en oeuvre sur le réseau d'opérateur 2.
Méthode 2 :
   Des informations reçues structurées de la façon suivante PLMN1 : IDS1, IdS2 ; PLMN2 : IdS3 signifient que le réseau d'opérateur dont l'identifiant est PLMN1 supporte les tranches de réseaux dont les identifiants de tranche sont ldS1 et ldS2 tandis que le réseau d'opérateur dont l'identifiant est PLMMN2 supporte la tranche de réseau dont l'identifiant de tranche est IdS3.

D'autres méthodes de structuration des informations entre identifiants de tranche et identifiants de réseau d'opérateur sont possibles pour associer les deux informations, sur la tranche de réseau et sur le réseau d'opérateur.

Selon une autre caractéristique particulière, dans le procédé de connexion, l'identifiant de tranche est transmis dans le même message que l'identifiant de réseau d'opérateur.

L'identifiant de réseau d'opérateur et l'identifiant de tranche de réseau pourront être avantageusement transmis dans un même message de façon à ce que le terminal dispose au même moment de ces deux identifiants pour faire la sélection du réseau d'attachement d'un opérateur et de la tranche de réseau. Dans le cas où l'identifiant de réseau d'opérateur est de type PLMN-ld, l'équipement en charge de la transmission du PLMN-Id peut insérer l'identifiant de tranche de réseau accessible dans le message destiné à informer le terminal sur le PLMN-Id disponible. Il est à noter que l'équipement peut envoyer plusieurs identifiants de tranches dans certains cas. Dans le cadre du déploiement des réseaux de cinquième génération, la spécification des équipements d'accès peut avantageusement intégrer la capacité de transmission des deux informations, à savoir l'identifiant de réseau d'opérateur et l'identifiant de tranche. L'envoi simultané des deux identifiants permet en outre un processus de sélection plus flexible permettant notamment de sélectionner d'abord un réseau d'opérateur puis une tranche de réseau ou bien l'inverse et ainsi autoriser des options de sélection plus ouvertes. En outre, l'option d'envoyer les deux identifiants dans le même message permet d'économiser des ressources, ce qui peut être important notamment en situation où les réseaux d'accès sont des réseaux mobiles. Les messages utilisés pour transmettre les identifiants relatifs aux réseaux d'opérateurs et aux tranches de réseau peuvent être envoyés suivant un mode de transmission unicast, multicast ou broadcast.

Selon une autre caractéristique particulière, dans le procédé de connexion, l'identifiant de tranche est transmis dans un message distinct du message comprenant l'identifiant de réseau d'opérateur.

Les deux identifiants relatifs respectivement au réseau d'opérateur et à la tranche de réseau peuvent avantageusement être transmis dans deux messages différents. En effet, dans un premier temps le terminal peut recevoir par exemple l'identifiant de réseau d'opérateur et sélectionner le réseau en le confrontant aux identifiants stockés sur le terminal et ensuite recevoir l'identifiant de tranche de réseau permettant de sélectionner la tranche de réseau en le confrontant aux identifiants de tranche de réseau stockées sur le terminal. Cette option permet d'une part de pouvoir exploiter des formats de messages différents et d'autre part d'envisager que les deux messages puissent être transmis par des entités différentes. En outre, dans une perspective de déploiement dans des réseaux existants, cette option consistant à envoyer les deux identifiants dans deux messages différents est pertinente, puisqu'elle ne nécessite pas de mettre à jour un format de message existant, ni de coupler deux processus d'envoi d'identifiant aux terminaux.

Selon une autre caractéristique particulière, le procédé de connexion comprend en outre une étape de sélection d'un opérateur de réseau en fonction de l'au moins un identifiant de réseau d'opérateur reçu.

Les identifiants de réseaux reçus par le terminal peuvent être utilisés par le terminal pour sélectionner un réseau d'opérateur en plus de la tranche de réseau. La réception des deux identifiants par le terminal peut enrichir le processus de sélection et autoriser la sélection d'un réseau d'opérateur puis d'une tranche de réseau ou bien d'une tranche de réseau puis d'un réseau d'opérateur en fonction de l'algorithme de sélection du terminal. Pour un service lié à une tranche de réseau donnée, il peut être intéressant par exemple pour garantir qu'un service soit accessible quel que soit l'opérateur, de sélectionner la tranche de réseau puis le réseau d'opérateur. Dans un mode de réalisation, pour un service M2M lié à des services de santé, la tranche de réseau prime sur le choix d'opérateur mettant en oeuvre une architecture dédiée à cette tranche. Dans un autre mode de réalisation, notamment pour un service d'accès à une clientèle professionnelle, le choix du réseau d'opérateur est susceptible d'être privilégié notamment parce que la facturation des services liés à la tranche de réseau peut être spécifique à un opérateur donné.

Selon une autre caractéristique particulière, le réseau d'opérateur comprenant un réseau d'accès et un coeur de réseau, l'identifiant de tranche reçu par le terminal identifie des entités du coeur de réseau.

Plusieurs options existent pour structurer un réseau de communications. Parmi celles-ci, il est possible de conserver un réseau d'accès mutualisé, autrement dit non structuré en tranches, qui est utilisé par les différents terminaux pour transmettre et recevoir les données. Dans ce type d'architecture, seules des entités du coeur de réseau telles que les S-GW (en anglais Serving Gateway), PDN-GW (en anglais Packet Data Network Gateway), PCRF (en anglais Policy and Charging Rules Function), HSS (en anglais Home Subscriber Server)...s'il s'agit d'un réseau mobile, composent une tranche de réseau. Chaque tranche est associée à un type de trafic spécifique, une clientèle spécifique ou des services spécifiques en fonction de la stratégie de l'opérateur de coeur de réseau. Dans ce cas, la sélection de tranche de réseau n'intervient que pour des fonctions de coeur de réseau et ne s'applique pas au réseau d'accès qui est mutualisé et sur lequel seront véhiculés les différents flux des utilisateurs associés aux différentes tranches de coeur de réseau. Les identifiants de tranches de réseau et les identifiants de tranche de réseau stockés par le terminal concernent dans ce cas des entités du coeur de réseau.

Selon une autre caractéristique particulière, le réseau d'opérateur comprend un réseau d'accès et un coeur de réseau, et l'identifiant de tranche reçu par le terminal identifie des entités du réseau d'accès et des entités du coeur de réseau.

Une autre option consiste à composer des tranches de réseau aussi bien à partir d'entités de coeur de réseau que d'entités du réseau d'accès telles que les émetteurs radio NodeB, eNodeB s'il s'agit d'un réseau mobile et notamment DSLAM, BRAS ou BNG s'il s'agit d'un réseau fixe. Cette option permet de spécialiser une architecture de bout en bout pour une clientèle ou un service spécifique et ainsi garantir une certaine étanchéité avec les autres services ou clientèles selon les cas. Ce type d'architecture est notamment intéressant dans le cas où un trafic requiert un traitement adapté sur toute la chaine de communication de l'opérateur. Les identifiants mis en oeuvre dans ce type d'architecture identifient des tranches de réseau comprenant des entités de coeur de réseau et des entités d'accès. La tranche de réseau est dédiée au segment de clientèle ou au service, conformément à la politique de définition et de structuration en tranches mise en oeuvre par l'opérateur. L'infrastructure d'accès organisé en tranches peut également comprendre les fréquences radio, auquel cas toute l'architecture réseau est organisée en tranches de réseau dédiées à un service ou une clientèle spécifique. Ce cas de figure pourrait être pertinent dans le cas où un opérateur met en oeuvre une tranche de réseau spécifique pour les services de secours ou de sécurité, sur laquelle aucun autre type de trafic ne peut être véhiculé. L'opérateur garantit ainsi qu'un réseau dédié de bout en bout est mis en oeuvre pour le service ou le client en question.

Selon une autre caractéristique particulière, l'étape de sélection de la tranche de réseau du procédé de connexion comprend une étape de comparaison de l'au moins un identifiant de tranche reçu avec au moins un identifiant de tranche de réseau mémorisé dans le terminal.

La sélection de la tranche de réseau par le terminal pourra avantageusement s'opérer à partir d'une comparaison entre les identifiants de tranches reçus et des identifiants de tranche de réseau stockés dans le terminal. Les identifiants de tranche de réseau peuvent être par exemple stockés dans une mémoire interne du terminal. Cette option a un intérêt lorsque par exemple, la fourniture d'un terminal est comprise dans une offre commerciale d'accès au réseau d'un opérateur et celui-ci a la possibilité de configurer le terminal ou d'enregistrer des données dans le terminal, par exemple avec une liste de tranches de réseau à sélectionner suivant un ordre de priorité. Les identifiants de tranche de réseau pourront ainsi être classés suivant un ordre prioritaire permettant ainsi de sélectionner le premier dans la liste parmi les identifiants de service reçus.

Selon une autre caractéristique particulière, dans le procédé de connexion, l'au moins un identifiant de tranche de réseau du terminal est mémorisé dans la carte SIM du terminal.

Les identifiants de tranche peuvent être avantageusement stockés dans la carte SIM (en anglais Subscriber Identify Module) du terminal. Lorsque le terminal reçoit les identifiants de tranches de réseau accessibles, il les compare avec les identifiants mémorisées dans la carte SIM, et suivant par exemple une priorisation des identifiants en fonction de la tranche de réseau à privilégier, il effectue la sélection de la tranche de réseau. De la même façon, les identifiants pourront être enregistrés sur une carte eSIM. Cette option est notamment intéressante dans le cas où le terminal sélectionne un réseau d'opérateur et une tranche de réseau car l'algorithme de sélection du réseau d'opérateur s'appuie sur des identifiants mémorisés dans la carte SIM du terminal.

Selon une autre caractéristique particulière, dans le procédé de connexion, une tranche de réseau par défaut est sélectionnée si aucun identifiant de tranche reçu par le terminal ne correspond à un identifiant de tranche de réseau mémorisé dans le terminal.

Le terminal peut recevoir des identifiants de tranches de réseau d'attachement ne correspondant à aucun identifiant stocké. Dans ce cas, il n'est pas possible de sélectionner une tranche de réseau par analyse des identifiants de tranche de réseau stockés dans le terminal, dans une mémoire interne ou sur une carte SIM. Afin de pouvoir accéder à un ensemble de services minimum, le terminal peut sélectionner dans ce cas un réseau d'attachement par défaut, par exemple suivant un algorithme spécifique, lui permettant de pouvoir communiquer à minima. Ce mode particulier de réalisation permet notamment à un terminal de pouvoir joindre des services d'urgence ou de pouvoir accéder à des services lorsqu'il est en situation d'itinérance par exemple et qu'aucune des tranches des réseaux d'attachement dont il reçoit des identifiants ne sont présents dans l'algorithme de sélection.

Les différents aspects du procédé de connexion qui viennent d'être décrits peuvent être mis en oeuvre indépendamment les uns des autres ou en combinaison les uns avec les autres.

L'invention vise aussi un terminal utilisateur apte à se connecter à un sous ensemble d'un réseau dédié à un service, dit tranche de réseau, comprenant les modules suivants :
- Un module de réception d'un message comprenant au moins un identifiant de tranche de réseau ou de service, en provenance d'un équipement d'accès associé à l'au moins une tranche identifiée ;
- Un module de sélection d'une tranche de réseau en fonction de paramètres compris dans le terminal, et de l'au moins un identifiant de tranche ou de service reçu ;
- Un module d'attachement à l'équipement d'accès associé à la tranche de réseau sélectionnée, des informations comprenant une adresse IP ou un nom FQDN dudit équipement d'accès, permettant au terminal de s'attacher audit équipement d'accès et étant reçues dans le message comprenant l'au moins un identifiant de tranche de réseau ou de service.

L'invention vise aussi un système de connexion d'un terminal utilisateur à un sous ensemble d'un réseau dédié à un service, dit tranche de réseau comprenant :
- Au moins un terminal utilisateur ;
- Au moins un équipement d'accès associé à une tranche de réseau d'opérateur comprenant un module d'émission d'au moins un identifiant de tranche de réseau.

L'invention concerne aussi un programme d'ordinateur comprenant des instructions pour la mise en oeuvre des étapes du procédé de connexion qui vient d'être décrit, lorsque ce programme est exécuté par le processeur d'un terminal utilisateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 4. Description détaillée d'au moins un mode de réalisation de l'invention

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
La **figure 1** illustre de façon schématique un système de connexion à une tranche de réseau faisant intervenir un terminal utilisateur, selon l'invention ;
La **figure 2** illustre un système ou plusieurs terminaux se connectent à des tranches de réseau comprenant des entités de réseau d'accès et des entités de coeur de réseau, selon un aspect de l'invention ;
La **figure 3** illustre un système ou plusieurs terminaux se connectent à des tranches de réseau comprenant uniquement des entités de coeur de réseau, selon un aspect de l'invention ;
La **figure 4** illustre les différentes étapes du procédé de connexion selon un mode de réalisation de l'invention où une tranche de réseau comprend des entités de réseau d'accès et des entités de coeur de réseau ;
La **figure 5** illustre les différentes étapes du procédé de connexion selon un autre mode de réalisation de l'invention où une tranche de réseau comprend uniquement des entités de coeur de réseau ;
La **figure 6** illustre la structure d'un terminal utilisateur mettant en oeuvre les différentes étapes du procédé de connexion selon aspect de réalisation.

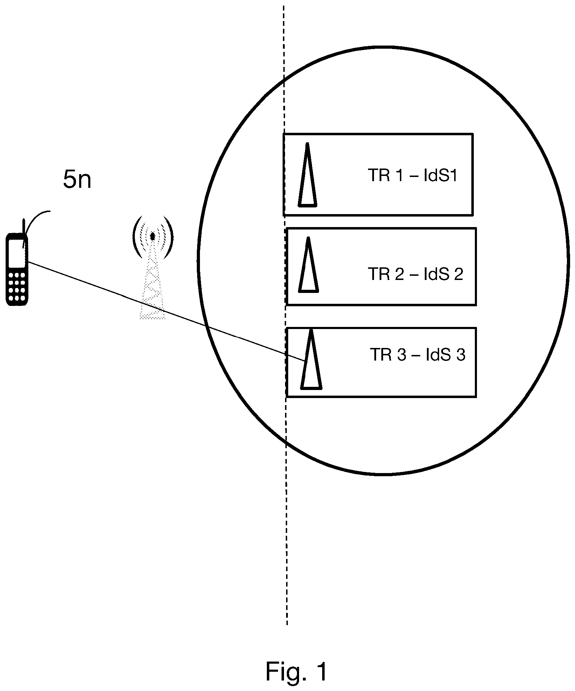

On se réfère tout d'abord à la **figure 1** qui illustre de façon schématique un système de connexion à une tranche de réseau faisant intervenir un terminal utilisateur se connectant à une tranche d'un réseau. Un réseau d'opérateur est composé de 3 tranches de réseau TR1, TR2, TR3, ces tranches pouvant par exemple être associées à des services distincts. Selon un mode de réalisation particulier, la tranche de réseau TR1 est mise en oeuvre pour véhiculer les flux spécifiques aux services M2M (en anglais Machine to Machine). La tranche de réseau TR2 est mise en oeuvre pour écouler le trafic lié aux services large bande d'une clientèle professionnelle tandis que la tranche de réseau TR3 est mise en oeuvre pour véhiculer les flux d'une clientèle résidentielle. L'opérateur peut, en fonction de sa stratégie, déployer autant de tranches de réseau que nécessaire et affecter ces tranches de réseau à des trafics spécifiques, à des clientèles spécifiques ou à des segments de marché spécifiques.

Chaque tranche de réseau respectivement identifiée TR1, TR2, TR3 sont susceptibles d'émettre des identifiants de tranches ldS1, IdS2, IdS3 à destination des terminaux. Ces identifiants de tranches pourront notamment être émis sur des fréquences radio s'il s'agit de réseaux mobiles ou sur le lien d'accès filaire, par exemple le réseau optique ou le réseau de cuivre, s'il s'agit de réseaux filaires. La transmission des identifiants de tranches et la réception de ceux-ci par les terminaux ne requièrent pas que les terminaux soient connectés au réseau d'attachement ; notamment il n'est pas nécessaire que les terminaux aient une adresse IP. Si les terminaux sont sur un réseau filaire, ils sont connectés physiquement au réseau mais il n'est pas nécessaire qu'ils aient en outre une connectivité réseau pour recevoir les identifiants de tranches. Ainsi de façon identique à ce qui est mis en oeuvre dans les architectures de réseaux pour informer un terminal mobile sur les différents réseaux disponibles à un endroit donné via la diffusion de messages comprenant les informations de type PLMN Id, les terminaux sont également informés sur les tranches de réseau accessibles.

Le terminal 5n s'attache à la tranche de réseau TR3 car l'identifiant de tranche IdS3 transmis par un équipement d'accès de cette tranche et reçu par le terminal a été sélectionné par celui-ci. Par exemple, le terminal 5n est un smartphone à usage résidentiel s'attachant à la tranche de réseau destinée à véhiculer les flux d'une clientèle résidentielle. La tranche de réseau est mise en oeuvre en dédiant des entités (par exemple dans un cadre de virtualisation d'équipements réseau), des équipements ou des fonctions (nommage, adressage...) à une clientèle ou un service spécifique. Par exemple, la tranche de réseau TR3 peut être composée d'équipements d'accès dédiés, d'entités de gestion des utilisateurs spécifiques et de fonctions de routage dédiées. Sachant qu'il s'agit de dédier des entités à différents services, l'opérateur peut avantageusement s'appuyer sur les techniques de virtualisation pour déployer des architectures organisées en tranches de réseau mais il ne s'agit pas d'une nécessité. Des équipements physiques sont dans ce cas déployés pour être spécifiquement affectés à la mise en oeuvre de tranches de réseau.

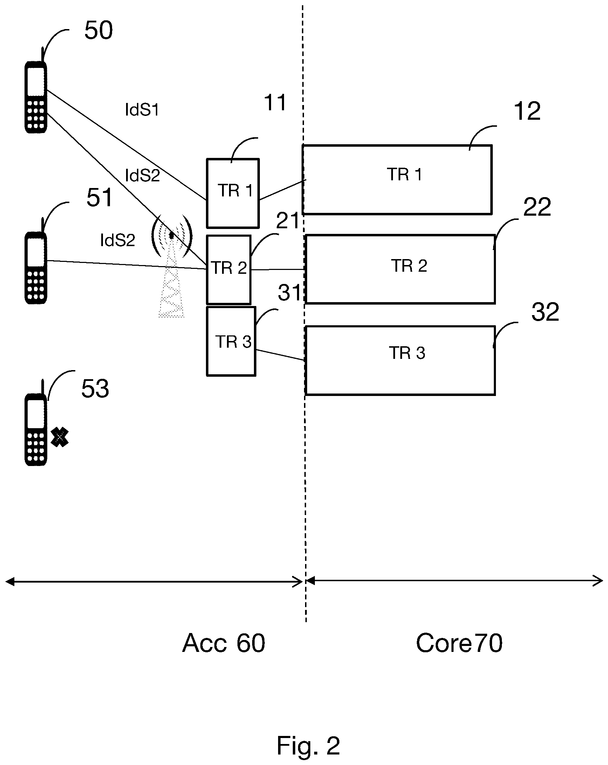

On se réfère maintenant à la **figure 2** qui illustre un système ou plusieurs terminaux se sont connectés à des tranches de réseau comprenant à la fois des entités de réseau d'accès 60 et des entités de coeur de réseau 70. Dans ce mode de réalisation, trois terminaux 50, 51, 53 sont susceptibles de s'attacher à des tranches de réseau TR1, TR2, TR3. Les tranches de réseau dans ce mode de réalisation comprennent des entités de réseau d'accès et des entités de coeur de réseau. Par exemple la tranche de réseau TR1 comprend des entités de réseau d'accès 11 et des entités de coeur de réseau 12 tandis que la tranche de réseau TR2 comprend des entités d'accès 21 et des entités de coeur 22. La tranche de réseau TR3 comprend des entités d'accès 31 et des entités de coeur 32. S'il s'agit d'infrastructure mobile, les entités de réseau d'accès sont par exemple les eNodeB, Node B, RNC (en anglais Radio Network Controller) tandis que les entités de coeur de réseau sont notamment le MME (en anglais Mobility Management Entity), la S-GW (en anglais Serving Gateway), la PDN-GW (en anglais Packet Data Network Gateway). La tranche de réseau peut également intégrer par exemple des fréquences radio.

Le terminal 50 est dans ce mode de réalisation, une fois le procédé de l'invention mis en oeuvre, connecté simultanément à deux tranches distinctes TR1 et TR2. Le terminal 50 est par exemple doté de capacités à acheminer des flux de type M2M, véhiculés sur la tranche de réseau TR1, et des flux de données professionnels, transitant sur la tranche de réseau TR2. Le terminal 50, recevant des identifiants de tranches IdS1 et IdS2 de la part des entités de réseau d'accès respectifs 11 et 21, et ayant la capacité d'émettre et de recevoir des flux associés à ces tranches de réseau, se connecte à ces deux tranches de réseau. Il est évident que le terminal 50 doit avoir les capacités de router les flux respectifs associés à ces tranches de réseau. Il peut également décider de se connecter à une seule tranche de réseau bien que supportant la capacité à se connecter aux deux tranches, notamment en fonction de sa configuration. Le terminal 50, selon le mode de réalisation, peut se connecter simultanément aux deux tranches dont il reçoit les identifiants de services ou bien être configuré pour s'attacher à une seule tranche, quitte à s'attacher ultérieurement à l'autre tranche si besoin.

Le terminal 51 est connecté, une fois le procédé de connexion réalisé, à une seule tranche de réseau, en l'occurrence la tranche de réseau TR2, soit parce qu'il est configuré pour se connecter à une seule tranche de réseau ou parce qu'il n'a pas reçu d'autres identifiants de tranches de réseau auxquelles il aurait été susceptible de se connecter. Le terminal 53 n'est connecté à aucune tranche de réseau, soit parce qu'il est configuré pour se connecter à aucune tranche de réseau correspondant aux identifiants de tranches qu'il a reçus, soit parce qu'il n'est pas à portée d'un réseau d'accès transmettant un identifiant de tranche.

Les identifiants de tranches de réseau déployées par un opérateur peuvent être de tout type et être construit à partir de codes alphanumériques divers. Par exemple, un opérateur peut décider que l'identifiant de tranche de réseau destinée à router le trafic M2M est M2M. De même, il peut décider que l'identifiant de tranche destinée à router le trafic d'un opérateur virtuel est par exemple OpéA. Quel que soit le code alpha numérique retenu, le terminal doit être en mesure de l'interpréter pour sélectionner la tranche de réseau. L'opérateur a en outre la possibilité de mettre en oeuvre une architecture réseau ou un équipement d'accès d'une tranche de réseau qui transmet plusieurs identifiants de tranches. Les entités du réseau d'accès et du coeur de réseau sont dans ce cas déployées pour écouler le trafic de plusieurs tranches de réseau mises en oeuvre par un opérateur. Par exemple il pourrait être envisagé qu'un opérateur dédie des entités de réseau pour les services large bande professionnels et résidentiels.

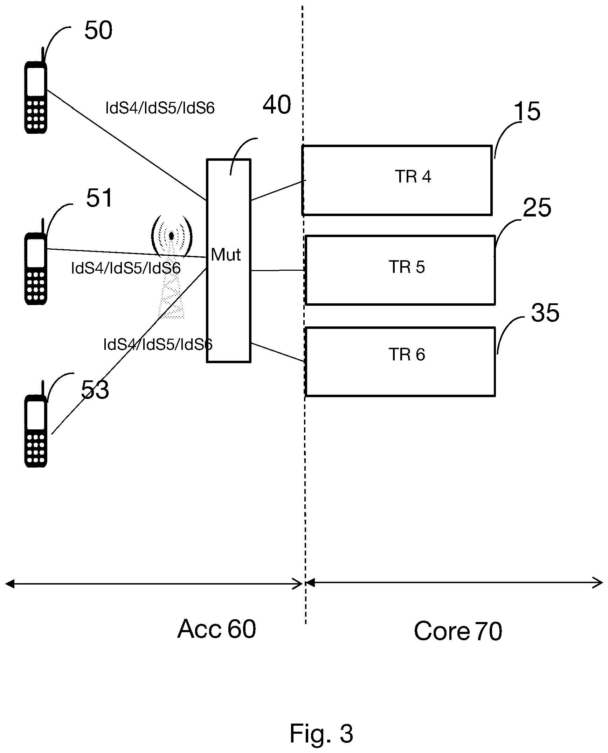

On se réfère maintenant à la **figure 3** qui illustre un système ou plusieurs terminaux se connectent à des tranches de réseau comprenant uniquement des entités de coeur de réseau. La différence avec la figure 2 précédemment décrite réside dans le fait que les tranches de réseau mises en oeuvre par l'opérateur ne comprennent que des entités de coeur de réseau 70. Les tranches de réseau TR4, TR5 et TR6 comprennent respectivement des entités de coeur de réseau 15, 25 et 35. Dans ce mode de réalisation les entités 40 du réseau d'accès 60 ne sont pas différenciées par tranche de réseau et sont donc communes dans le sens ou aucune entité du réseau d'accès n'est associée à une tranche de réseau particulière. Ce mode de réalisation ne signifie pas que des entités du réseau d'accès ne soient pas dupliquées notamment pour assurer une disponibilité des services mais ces entités, même répliquées, ne sont pas dédiées à des tranches de réseau propres à véhiculer des flux de données spécifiques.

Le réseau d'accès 60 n'est donc pas structuré en tranches de réseau et représente une infrastructure d'accès commune pour véhiculer les différents flux échangés entre les terminaux et les tranches de réseau mises en oeuvre dans le coeur de réseau 70. Sachant que les tranches de réseau ne sont pas mises en oeuvre dans le réseau d'accès, l'envoi des identifiants de tranches aux terminaux n'est pas spécifique à une tranche de réseau et il est nécessaire qu'un équipement du réseau d'accès envoie de façon indifférenciée les identifiants de tranches de réseau du coeur de réseau pour lesquelles il assure l'accès. Les terminaux 50, 51 et 53 reçoivent donc de façon indifférenciée les identifiants de tranches de réseau TR4, TR5 et TR6. En fonction de l'algorithme de sélection des terminaux recevant ces identifiants de tranches, ces terminaux sélectionneront la ou les tranches de réseau parmi ceux correspondant aux identifiants de tranche reçus. Les entités 40 du réseau d'accès 60 doivent donc émettre les identifiants de tranches de réseau du coeur de réseau à tous les terminaux sauf si une politique spécifique a été configurée par exemple pour envoyer un ou plusieurs identifiants de tranches de réseau spécifiques.

Les terminaux sont d'ores et déjà informés dans les architectures mobiles des réseaux d'opérateur auxquels ils peuvent se connecter. Les informations correspondantes PLMN-Id sont transmises par des messages RRC (en anglais Radio Resource Control) depuis les eNodeB du réseau LTE (en anglais Long Term Evolution) jusqu'au terminal. Les identifiants de tranches de réseau accessibles, à transmettre aux terminaux, pourront avantageusement être transmises également dans les messages RRC lorsqu'il s'agit de réseaux mobiles. L'algorithme de sélection de tranche de réseau du terminal peut être enrichi en combinant l'identifiant de tranche reçu en plus de l'identifiant de réseau d'opérateur, par exemple basé sur le PLMN-ld, reçu. Ainsi il peut être envisagé de forcer la sélection d'une tranche de réseau d'un opérateur en particulier ou bien un service en particulier, voire n'importe quelle tranche de réseau d'un opérateur. Un tel algorithme pourrait par exemple être structuré de la façon suivante :

### Orange. B2B

### Orange. MassMarket

### *.M2M

Cet algorithme signifie que pour les services B2B (en anglais Business-to-Business), la tranche de réseau B2B du réseau Orange doit être sélectionnée. Si un terminal reçoit un PLMN Id égal à Orange et un identifiant de tranche égal à B2B, il sélectionnera alors Orange.B2B. Pour les services résidentiels, la tranche de réseau « résidentiel » de l'opérateur Orange doit être sélectionnée. Enfin, pour les services M2M, une tranche de réseau supportant les services M2M proposée par n'importe quel opérateur peut être sélectionnée. Si on ajoute l'information Orange.*, cela pourrait consister à autoriser la sélection de n'importe quelle tranche de réseau supportée par l'opérateur Orange par exemple en cas de besoin d'accès pour des services d'urgence.

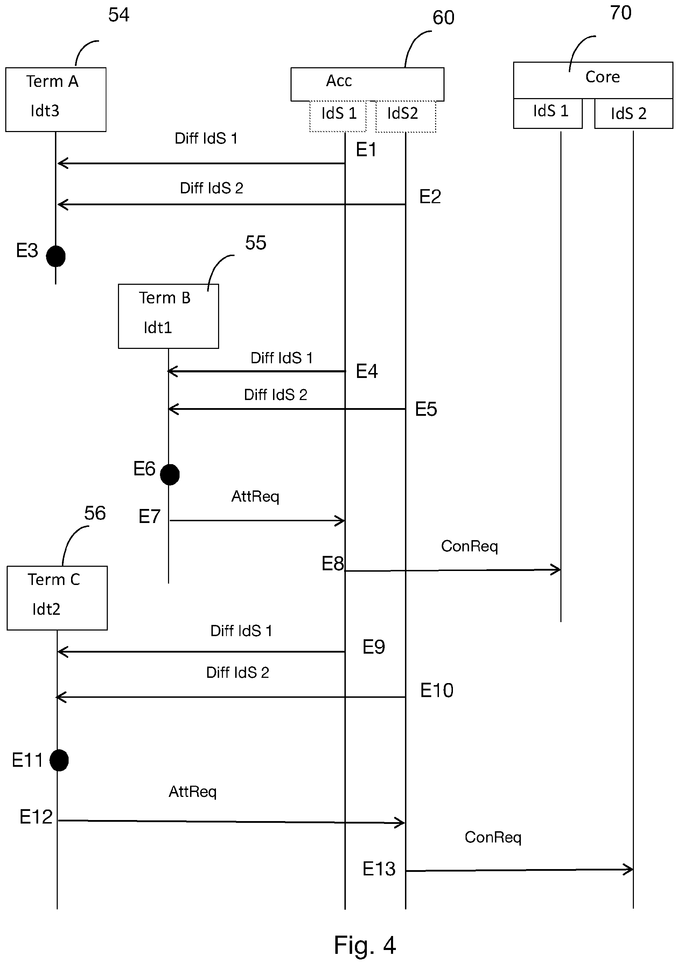

On se réfère maintenant à la **figure 4** qui illustre les différentes étapes du procédé de connexion selon un mode de réalisation de l'invention où une tranche de réseau comprend des entités de réseau d'accès et des entités de coeur de réseau. Dans ce mode de réalisation, le terminal 54 est configuré avec un identifiant de tranche égal à 3, signifiant que ce terminal 54 ne peut se connecter qu'à une tranche de réseau correspondant à l'identifiant de tranche Idt3. Cet identifiant de tranche peut être configuré directement dans le terminal par exemple dans un fichier de configuration pré-installé par l'opérateur auprès duquel l'utilisateur a souscrit un service ou bien sur une carte SIM installée dans le terminal. Le terminal 54 est à portée d'un réseau d'accès mobile s'il s'agit d'un réseau mobile ou bien est rattaché via un accès xDSL ou optique par exemple s'il s'agit d'un réseau d'accès filaire. Dans ce mode de réalisation, les tranches de réseau mises en oeuvre par l'opérateur comprennent des entités de réseau d'accès 60 et des entités de coeur de réseau 70. Deux tranches de réseau sont respectivement identifiées par des identifiants de tranches égaux à 1 et 2 (ldS1 et IdS2). Lors d'une étape E1, une entité du réseau d'accès de la tranche de réseau dont l'identifiant de tranche est IdS1 transmet au terminal 54 un message indiquant qu'une tranche de réseau IdS1 est accessible. De la même façon, une entité du réseau d'accès de la tranche de réseau IdS2 transmet au terminal 54 lors de l'étape E2 un message indiquant qu'une tranche de réseau IdS2 est accessible.

Les messages indiquant l'accessibilité des tranches de réseau peuvent être transmis grâce à des messages de type unicast, destinés uniquement à un terminal, ou bien de type broadcast ou multicast de telle façon à ce qu'un seul message soit transmis pour un ensemble de terminaux. Il est plus probable que ces messages soient de type multicast ou broadcast car le terminal n'est pas directement joignable par le réseau. Il n'est en effet pas connecté et n'a donc pas d'adresse IP allouée par le réseau. Néanmoins on peut envisager par exemple que le terminal, doté d'une adresse de type lien-local lPv6, puisse être joint directement par un équipement du réseau alors que le terminal ne s'est pas vu allouer de préfixe de réseau IPv6 global par le réseau d'accès. Le terminal 54, à la réception des messages émis lors des étapes E1 et E2, compare les numéros d'identifiant de tranche reçus avec le numéro d'identifiant de tranche configuré et sélectionne lors d'une étape E3, si possible, une ou plusieurs tranches de réseau dans le but de s'y attacher. Dans le cas présent, l'identifiant de tranche configuré sur le terminal est IdT3 tandis qu'il reçoit des identifiants de tranches IdS1 et IdS2. L'algorithme du terminal 54, dans ce mode de réalisation, étant de sélectionner la ou les tranche(s) de réseau dont le numéro d'identifiant de tranche stocké sur le terminal est (sont) égales au(x) numéro(s) d'identifiant de tranche reçus, il ne sélectionne aucune tranche de réseau et ne se connecte à aucune tranche de réseau. Il pourrait être envisagé que dans ce cas de figure, le terminal 54 sélectionne une tranche de réseau par défaut, par exemple celle ayant le numéro d'identifiant de tranche le plus petit, de façon à pouvoir malgré tout accéder à certains services, par exemple de sécurité. Le comportement du terminal relève de l'algorithme mis en oeuvre. Le terminal 54, dans ce mode de réalisation, ne se connecte à aucune tranche car il n'a reçu aucun message comprenant l'identifiant de tranche ldS3.

Le terminal 55 est configuré avec l'identifiant de tranche égal à Idt1. De la même façon que pour le terminal 54, lors des étapes respectives E4 et E5, le terminal 55 reçoit des messages comprenant les identifiants de tranches ldS1 et ldS2. Lors d'une étape E6, le terminal 55 compare les identifiants de tranches reçus et l'identifiant de tranche configuré. Comme un numéro d'identifiant de tranche configuré sur le terminal correspond à un numéro d'identifiant de tranche reçu, le terminal 55 sélectionne en l'occurrence l'identifiant de tranche IdS1. Lors de l'étape E7, le terminal 55 envoie une demande d'attachement à destination de la tranche de réseau du réseau d'accès correspondant à l'identifiant de tranche ldS1. Les informations permettant au terminal de s'attacher à la tranche de réseau sélectionnée, telle que l'adresse IP de l'entité d'accès ou son nom FQDN (en anglais Fully Qualified Domain Name), peuvent être avantageusement envoyés dans le message comprenant l'identifiant de tranche de réseau, ou bien être configurés dans l'équipement par exemple en associant l'identifiant de tranche configuré avec les informations nécessaires à la procédure d'attachement. Sachant que l'attachement requiert une sollicitation de ressources du coeur de réseau, la demande d'attachement réalisée lors de l'étape E7 est suivie d'une demande de connexion lors de l'étape E8 transmise par un équipement d'accès de la tranche vers un équipement de coeur de la tranche sélectionnée. S'il s'agit d'un réseau mobile, cette étape E8 pourra consister en une demande de PDP context (en anglais Packet Data Protocol) ou de bearer EPS (en anglais Evolved Packet System) instanciée lors des étapes E7 et E8 et permettant d'établir la connexion entre le terminal et la PDN-GW de la tranche de réseau IdS1. S'il s'agit d'un réseau xDSL, ces étapes E7 et E8 correspondent à la connexion entre le terminal et le DSLAM (en anglais Digital Subscriber Line Access Multiplexer) puis le BAS (en anglais Broadband Access Server) ou la BNG (Broadband Network Gateway) via le protocole PPP (en anglais Point to Point Protocol) ou DHCP (en anglais Dynamic Host Configuration Protocol).

De la même façon que pour les terminaux 54 et 55, le terminal 56 reçoit des identifiants de tranches IdS1 et IdS2 lors des étapes respectives E9 et E10. Le terminal 56 ayant un identifiant de tranche stocké IdT2 sélectionne la tranche de réseau dont le paramètre est ldS2 lors de l'étape E11 et s'attache aux entités d'accès de la tranche de réseau correspondant à l'identifiant de tranche ldS2 lors de l'étape E12 puis aux entités de coeur de cette même tranche de réseau lors de l'étape E13 via la demande connexion transmise depuis un équipement d'accès vers un équipement de coeur de réseau de la tranche considérée.

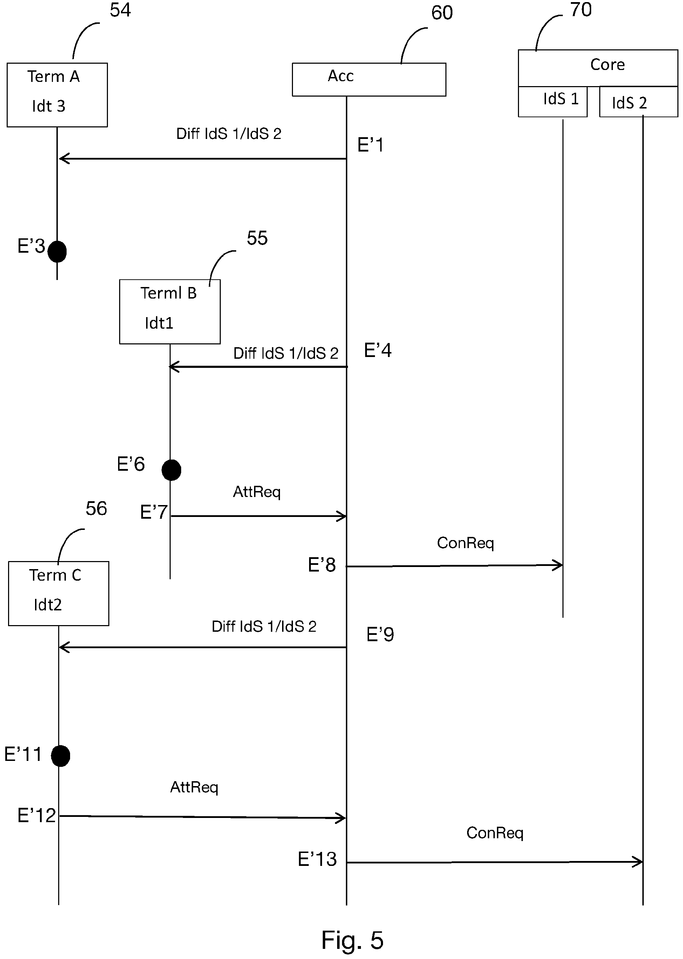

On se réfère maintenant à la **figure 5** qui illustre les différentes étapes du procédé de connexion selon un autre mode de réalisation de l'invention où une tranche de réseau comprend uniquement des entités de coeur de réseau. L'architecture présentée dans la figure 5 diffère de l'architecture de la figure 4 par le fait que les tranches de réseau mises en oeuvre par l'opérateur ne comprennent que des entités du coeur de réseau alors que le réseau d'accès n'est pas organisé en tranches de réseau. Les entités du réseau d'accès sont donc communes pour les différents terminaux et services. Le réseau d'accès n'étant pas structuré en tranches de réseau, les identifiants de tranches sont envoyés par un équipement du réseau d'accès commun. Cet équipement du réseau d'accès commun transmet aux terminaux l'ensemble des identifiants de tranches de réseau auxquelles les terminaux sont susceptibles de se connecter.

Le coeur de réseau 70 étant structuré en deux tranches de réseau dont les identifiants de tranche sont IdS1 et IdS2, l'entité du réseau d'accès doit envoyer aux terminaux l'ensemble des identifiants de tranches correspondant aux tranches déployées dans le coeur de réseau. Dans l'étape E'1, un équipement du réseau d'accès 60 transmet au terminal 54 un message comprenant les identifiants de tranches IdS1 et IdS2, le message pouvant être transmis selon un mode unicast, multicast ou broadcast. L'étape E'3 est en tout point comparable à l'étape E3 de la figure 4, le but pour le terminal 54 étant de comparer les identifiants de tranches reçus avec les identifiants de tranche configurés sur le terminal et d'en sélectionner un ou plusieurs. Le terminal 54 ayant un numéro d'identifiant de tranche qui ne correspond à aucun numéro d'identifiant de tranche reçu lors de l'étape E'1, le terminal 54 ne sélectionne aucune tranche de réseau et ne fait donc aucune demande d'attachement. Les étapes suivantes sont en tous points équivalentes aux étapes décrites dans la figure 4, les seules différences correspondant aux identifiants de tranches envoyés dans les messages des étapes E'4 et E'9, de façon comparable à ce qui a été décrit pour l'étape E'1. Il est également à noter que le réseau d'accès n'étant pas structuré en tranches de réseau, le réseau d'accès doit avoir un moyen de transmettre les demandes de connexion des étapes E'8 et E'13 aux tranches de réseau sélectionnées par les terminaux 55 et 56. Dans un mode particulier de réalisation, le réseau d'accès pourra s'appuyer sur un identifiant de tranche inclus dans les demandes d'attachement émis lors des étapes respectives E'7 et E'12 pour envoyer les demandes de connexion aux tranches de réseau sélectionnées par les terminaux respectifs.

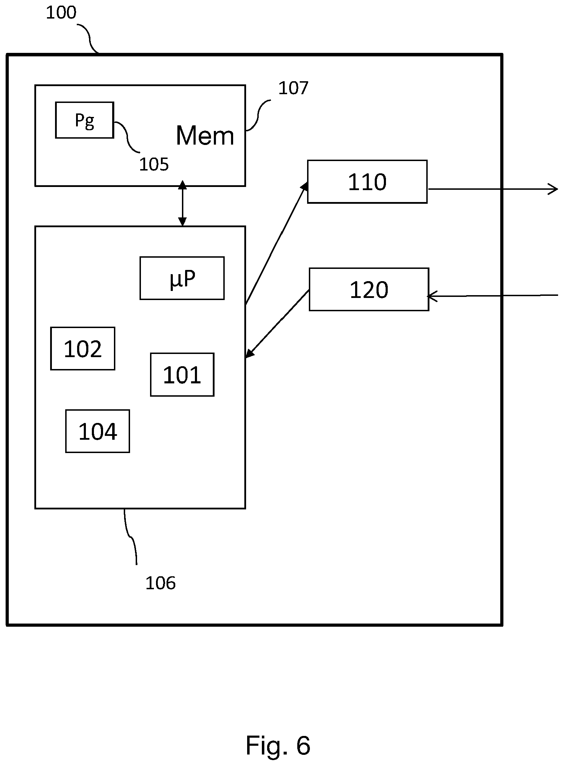

On se réfère maintenant à la **figure** 6 qui illustre les fonctions d'un terminal utilisateur agencé pour accomplir les différentes étapes du procédé de connexion selon un mode particulier de réalisation.

Par exemple, le terminal 100 comprend une unité de traitement 106, équipée par exemple d'un microprocesseur µP, et pilotée par un programme d'ordinateur 105, stocké dans une mémoire 107 et mettant en oeuvre le procédé de connexion selon l'invention. A l'initialisation, les instructions de code du programme d'ordinateur 105 sont par exemple chargées dans une mémoire RAM, avant d'être exécutées par le processeur de l'unité de traitement 106. Le terminal comprend une interface 110 d'émission de messages et une interface 120 de réception de messages.

L'unité de traitement 106 comprend en outre les modules suivants:
- un module 101 apte à traiter un message comprenant un identifiant de tranche de réseau reçu en provenance d'un équipement d'accès associé à l'au moins une tranche de réseau identifiée
- un module 104 de sélection d'une tranche de réseau en fonction de paramètres compris dans le terminal, et de l'au moins un identifiant de tranche reçu ;
- un module 102 d'attachement à l'équipement d'accès associé à la tranche de réseau sélectionnée.

Les modules décrits en relation avec la figure 6peuvent être matériels ou logiciels.

L'invention n'est pas limitée aux exemples de réalisation ci-dessus décrits et représentés, à partir desquels on pourra prévoir d'autres modes et d'autres formes de réalisation, sans pour autant sortir du cadre de l'invention. Le procédé de connexion, selon l'invention, s'avère particulièrement utile dans un contexte multi-opérateurs où le terminal peut être informé de tranches de réseaux associés à des services avant même de se connecter à un des réseaux d'opérateurs. En effet, il est généralement nécessaire pour se connecter à un réseau d'opérateur de souscrire un abonnement à un ou plusieurs services proposés par cet opérateur et il n'est pas optimal de recevoir les identifiants de tranche une fois connecté au réseau. L'invention permet d'envoyer ces identifiants avant même que le terminal soit connecté à un des réseaux d'opérateurs diffusant ces identifiants de tranches. Cela autorise un terminal de pouvoir le cas échéant souscrire à un service associé à une tranche de réseau proposé par l'opérateur, une fois l'identifiant de tranche reçu.

## Revendications

1. Procédé de connexion d'un terminal utilisateur (5n, 50, 51, 53) à un sous ensemble d'un réseau dédié à un service, dit tranche de réseau (TR1, TR2, TR3, TR4, TR5, TR6), mis en oeuvre par le terminal et comprenant :
- au moins une étape de réception (E1, E2, E'1, E4, E5, E9, E10, E'4, E'9) d'un message comprenant au moins un identifiant de tranche de réseau ou de service (ldS1, IdS2, IdS3, IdS4, IdS5, IdS6), en provenance d'un équipement d'accès associé à l'au moins une tranche identifiée;
- une étape de sélection (E3, E6, E11, E'3, E'6, E'11) d'une tranche de réseau en fonction de paramètres compris dans le terminal, et de l'au moins un identifiant de tranche ou de service reçu ;
- une étape d'attachement (E7, E12, E'7, E'12) à un équipement d'accès associé à la tranche de réseau sélectionnée, des informations comprenant une adresse IP ou un nom FQDN, Fully Qualified Domain Name, dudit équipement d'accès, permettant au terminal de s'attacher audit équipement d'accès et étant reçues dans le message comprenant l'au moins un identifiant de tranche de réseau ou de service.

2. Procédé de connexion selon la revendication 1 où le procédé comprend en outre une étape de réception par le terminal utilisateur d'au moins un identifiant de réseau d'opérateur.

3. Procédé de connexion selon la revendication 2 où l'au moins un identifiant de tranche ou de service est associé à l'identifiant de réseau d'opérateur.

4. Procédé de connexion selon la revendication 2 ou la revendication 3 où l'identifiant de tranche ou de service est reçu dans le même message que l'identifiant de réseau d'opérateur.

5. Procédé de connexion selon la revendication 2 ou la revendication 3 dans lequel l'identifiant de tranche ou de service est reçu dans un message distinct du message comprenant l'identifiant de réseau d'opérateur.

6. Procédé de connexion selon l'une quelconque des revendications 2, 3, 4 ou 5 comprenant en outre une étape de sélection d'un réseau d'opérateur en fonction de l'au moins un identifiant de réseau d'opérateur reçu.

7. Procédé de connexion selon l'une quelconque des revendications 1 à 6 dans lequel, le réseau d'opérateur comprenant un réseau d'accès (60) et un coeur de réseau (70), l'identifiant de tranche ou de service identifie des entités du coeur de réseau (15, 25, 35).

8. Procédé de connexion selon l'une quelconque des revendications 1 à 6 dans lequel, le réseau d'opérateur comprenant un réseau d'accès et un coeur de réseau, l'identifiant de tranche ou de service identifie des entités du réseau d'accès (11, 21, 31) et des entités du coeur de réseau (12, 22, 32).

9. Procédé de connexion selon l'une quelconque des revendications 1 à 8 dans lequel l'étape de sélection de la tranche de réseau comprend une étape de comparaison de l'au moins un identifiant de tranche ou de service reçu avec au moins un identifiant de tranche de réseau (ldT1, IdT2, IdT3) mémorisé dans le terminal.

10. Procédé de connexion selon la revendication 9 dans lequel l'au moins un identifiant de tranche de réseau du terminal est mémorisé dans la carte SIM.

11. Procédé de connexion selon l'une quelconque des revendications 9 ou 10 où une tranche de réseau par défaut est sélectionnée si aucun identifiant de tranche ou de service reçu par le terminal ne correspond à un identifiant de tranche de réseau mémorisé dans le terminal.

12. Terminal utilisateur apte à se connecter à un sous ensemble d'un réseau dédié à un service, dit tranche de réseau, **caractérisé en ce qu'**il comprend les modules suivants :
- Module de réception (101) d'au moins un message comprenant au moins un identifiant de tranche de réseau ou de service, en provenance d'un équipement d'accès associé à l'au moins une tranche identifiée ;
- Module de sélection (104) d'une tranche de réseau en fonction de paramètres compris dans le terminal, et de l'au moins un identifiant de tranche ou de service reçu ;
- Module d'attachement (102) à un équipement d'accès associé à la tranche de réseau sélectionnée, des informations, comprenant une adresse IP ou un nom FQDN, Fully Qualified Domain Name, dudit équipement d'accès, permettant au terminal de s'attacher audit équipement d'accès et étant reçues dans l'au moins un message comprenant l'au moins un identifiant de tranche de réseau ou de service.

13. Système de connexion d'un terminal utilisateur à un sous ensemble d'un réseau dédié à un service, dit tranche de réseau comprenant :
- Au moins un terminal utilisateur selon la revendication 12 ;
- Au moins un équipement d'accès associé à une tranche de réseau d'opérateur comprenant un module d'émission d'au moins un identifiant de tranche de réseau ou de service.

14. Programme d'ordinateur comprenant des instructions pour la mise en oeuvre des étapes du procédé de connexion selon la revendication 1, lorsque ledit programme est exécuté par un processeur.

15. Support d'enregistrement lisible par un terminal utilisateur (5n) sur lequel sont stockées les instructions de code d'un programme d'ordinateur selon la revendication 14.

## Patentansprüche

1. Verfahren zur Verbindung eines Benutzerendgeräts (5n, 50, 51, 53) mit einem für einen Dienst dedizierten Teilbereich eines Netzwerks, Netzwerk - Slice (TR1, TR2, TR3, TR4, TR5, TR6) genannt, das von dem Endgerät ausgeführt wird und umfasst:
- mindestens einen Schritt des Empfangens (E1, E2, E'1, E4, E5, E9, E10, E'4, E'9) einer Nachricht, die mindestens eine Netzwerk-Slice- oder Dienst-Kennung (IdS1, IdS2, IdS3, IdS4, IdS5, IdS6) umfasst, von einer Zugangseinrichtung, die dem mindestens einen identifizierten Slice zugeordnet ist;
- einen Schritt des Auswählens (E3, E6, E11, E'3, E'6, E'11) eines Netzwerk-Slice in Abhängigkeit von Parametern, die in dem Endgerät enthalten sind, und von der mindestens einen empfangenen Slice- oder Dienst-Kennung;
- einen Schritt des Verknüpfens (E7, E12, E'7, E'12) mit einer dem ausgewählten Netzwerk - Slice zugeordneten Zugangseinrichtung von Informationen, die eine IP-Adresse oder einen FQDN, Fully Qualified Domain Name, der Zugangseinrichtung umfassen, die es dem Endgerät ermöglichen, sich mit der Zugangseinrichtung zu verknüpfen, und in der Nachricht empfangen werden, welche die mindestens eine Netzwerk-Slice- oder Dienst-Kennung umfasst.

2. Verfahren zur Verbindung nach Anspruch 1, wobei das Verfahren ferner einen Schritt des Empfangens mindestens einer Betreibernetzwerk-Kennung durch das Benutzerendgerät umfasst.

3. Verfahren zur Verbindung nach Anspruch 2, wobei die mindestens eine Slice- oder Dienst-Kennung der Betreibernetzwerk-Kennung zugeordnet ist.

4. Verfahren zur Verbindung nach Anspruch 2 oder Anspruch 3, wobei die Slice- oder Dienst-Kennung in derselben Nachricht wie die Betreibernetzwerk-Kennung empfangen wird.

5. Verfahren zur Verbindung nach Anspruch 2 oder Anspruch 3, wobei die Slice- oder Dienst-Kennung in einer Nachricht empfangen wird, die verschieden von der die Betreibernetzwerk-Kennung umfassenden Nachricht ist.

6. Verfahren zur Verbindung nach einem der Ansprüche 2, 3, 4 oder 5, umfassend ferner einen Schritt des Auswählens eines Betreibernetzwerks in Abhängigkeit von der mindestens einen empfangenen Betreibernetzwerk-Kennung.

7. Verfahren zur Verbindung nach einem der Ansprüche 1 bis 6, wobei, wenn das Betreibernetzwerk ein Zugangsnetzwerk (60) und ein Kernnetzwerk (70) umfasst, die Slice- oder Dienst-Kennung Entitäten des Kernnetzwerks (15, 25, 35) identifiziert.

8. Verfahren zur Verbindung nach einem der Ansprüche 1 bis 6, wobei, wenn das Betreibernetzwerk ein Zugangsnetzwerk und ein Kernnetzwerk umfasst, die Slice-oder Dienst-Kennung Entitäten des Zugangsnetzwerks (11, 21, 31) und Entitäten des Kernnetzwerks (12, 22, 32) identifiziert.

9. Verfahren zur Verbindung nach einem der Ansprüche 1 bis 8, wobei der Schritt des Auswählens des Netzwerk-Slice einen Schritt des Vergleichens der mindestens einen empfangenen Slice- oder Dienst-Kennung mit mindestens einer in dem Endgerät gespeicherten Netzwerk-Slice-Kennung (IdT1, IdT2, IdT3) umfasst.

10. Verfahren zur Verbindung nach Anspruch 9, wobei die mindestens eine Netzwerk-Slice-Kennung des Endgeräts in der SIM-Karte gespeichert ist.

11. Verfahren zur Verbindung nach einem der Ansprüche 9 oder 10, wobei ein Standard-Netzwerk-Slice ausgewählt wird, wenn keine von dem Endgerät empfangene Slice- oder Dienst-Kennung einer in dem Endgerät gespeicherten Netzwerk - Slice - Kennung entspricht.

12. Benutzerendgerät, das in der Lage ist, sich mit einem für einen Dienst dedizierten Teilbereich eines Netzwerks zu verbinden, **dadurch gekennzeichnet, dass** es die folgenden Module umfasst:
- Modul zum Empfangen (101) mindestens einer Nachricht, die mindestens eine Netzwerk-Slice- oder Dienst-Kennung umfasst, von einer Zugangseinrichtung, die dem mindestens einen identifizierten Slice zugeordnet ist;
- Modul zum Auswählen (104) eines Netzwerk - Slice in Abhängigkeit von Parametern, die in dem Endgerät enthalten sind, und von der mindestens einen empfangenen Slice- oder Dienst-Kennung;
- Modul zum Verknüpfen (102) mit einer dem ausgewählten Netzwerk-Slice zugeordneten Zugangseinrichtung von Informationen, die eine IP-Adresse oder einen FQDN, Fully Qualified Domain Name, der Zugangseinrichtung umfassen, die es dem Endgerät ermöglichen, sich mit der Zugangseinrichtung zu verknüpfen, und in der mindestens einen Nachricht empfangen werden, welche die mindestens eine Netzwerk-Slice- oder Dienst-Kennung umfasst.

13. System zur Verbindung eines Benutzerendgeräts mit einem für einen Dienst dedizierten Teilbereich eines Netzwerks, Netzwerk-Slice genannt, umfassend:
- Mindestens ein Benutzerendgerät nach Anspruch 12;
- Mindestens eine Zugangseinrichtung, die einem Betreibernetzwerk-Slice zugeordnet ist, umfassend ein Modul zum Senden mindestens einer Netzwerk-Slice- oder Dienst-Kennung.

14. Computerprogramm, das Anweisungen umfasst, die bei der Ausführung des Programms durch einen Prozessor die Schritte des Verfahrens zur Verbindung nach Anspruch 1 ausführen.

15. Von einem Benutzerendgerät (5n) lesbares Speichermedium, auf dem die Codeanweisungen eines Computerprogramms nach Anspruch 14 gespeichert sind.

## Claims

1. Method for connecting a user terminal (5n, 50, 51, 53) to a subset of a network dedicated to a service, termed network slice (TR1, TR2, TR3, TR4, TR5, TR6), implemented by the terminal and comprising:
- at least one step of receiving (E1, E2, E'1, E4, E5, E9, E10, E'4, E'9) a message comprising at least one service or network slice identifier (IdS1, IdS2, IdS3, IdS4, IdS5, IdS6), originating from an access equipment associated with the at least one identified slice;
- a step of selecting (E3, E6, E11, E'3, E'6, E'11) a network slice as a function of parameters comprised in the terminal, and of the at least one service or slice identifier received;
- a step of attaching (E7, E12, E'7, E'12) to an access equipment associated with the network slice selected, information comprising an IP address or a Fully Qualified Domain Name (FQDN) of said access equipment enabling the terminal to attach to said access equipment and being received in the message comprising the at least one service or network slice identifier.

2. Connection method according to Claim 1 where the method furthermore comprises a step of reception by the user terminal of at least one operator network identifier.

3. Connection method according to Claim 2 where the at least one service or slice identifier is associated with the operator network identifier.

4. Connection method according to Claim 2 or Claim 3 where the service or slice identifier is received in the same message as the operator network identifier.

5. Connection method according to Claim 2 or Claim 3, wherein the service or slice identifier is received in a message distinct from the message comprising the operator network identifier.

6. Connection method according to any one of Claims 2, 3, 4 and 5 furthermore comprising a step of selecting an operator network as a function of the at least one operator network identifier received.

7. Connection method according to any one of Claims 1 to 6, wherein, the operator network comprising an access network (60) and a network core (70), the service or slice identifier identifies entities of the network core (15, 25, 35).

8. Connection method according to any one of Claims 1 to 6, wherein, the operator network comprising an access network and a network core, the service or slice identifier identifies entities of the access network (11, 21, 31) and entities of the network core (12, 22, 32).

9. Connection method according to any one of Claims 1 to 8, wherein the step of selecting the network slice comprises a step of comparing the at least one service or slice identifier received with at least one network slice identifier (IdT1, IdT2, IdT3) stored in the terminal.

10. Connection method according to Claim 9, wherein the at least one network slice identifier of the terminal is stored in the SIM card.

11. Connection method according to either one of Claims 9 and 10 where a default network slice is selected if no service or slice identifier received by the terminal corresponds to a network slice identifier stored in the terminal.

12. User terminal able to connect to a subset of a network dedicated to a service, termed network slice, **characterized in that** it comprises the following modules:
- reception module (101) for receiving at least one message comprising at least one service or network slice identifier, originating from an access equipment associated with the at least one identified slice;
- selection module (104) for selecting a network slice as a function of parameters comprised in the terminal, and of the at least one service or slice identifier received;
- attachment module (102) for attaching to an access equipment associated with the network slice selected, information, comprising an IP address or a Fully Qualified Domain Name (FQDN), of said access equipment enabling the terminal to attach to said access equipment and being received in the at least one message comprising the at least one service or network slice identifier.

13. System for connecting a user terminal to a subset of a network dedicated to a service, termed network slice, comprising:
- at least one user terminal according to Claim 12;
- at least one access equipment associated with an operator network slice comprising a module for sending at least one service or network slice identifier.

14. Computer program comprising instructions for the implementation of the steps of the connection method according to Claim 1, when said program is executed by a processor.

15. Recording medium readable by a user terminal (5n), on which the code instructions of a computer program according to Claim 14 are stored.
